# EUROPÄISCHE PATENTSCHRIFT

(11) **EP 1 182 013 B1**
(45) Veröffentlichungstag und Bekanntmachung des Hinweises auf die Patenterteilung: **23.07.2008**
(21) Anmeldenummer: 01810267.3
(22) Anmeldetag: 19.03.2001
(51) Int. Cl.: B25F 5/00, F16D 49/00, B27B 5/38

(54) **Elektrowerkzeug mit Bremsvorrichtung**
Electric power tool with braking device
Outil électrique avec dispositif de freinage

(30) Priorität: 17.08.2000 DE 10040329
(43) Veröffentlichungstag der Anmeldung: 27.02.2002
(73) Patentinhaber: HILTI Aktiengesellschaft, 9494 Schaan (LI)
(72) Erfinder: Hartmann, Markus, 87665 Mauerstetten (DE); Haas, Günter, 86916 Kaufering (DE); Dieterle, Andreas, 82234 Wessling (DE)
(74) Vertreter: Wildi, Roland

(56) Entgegenhaltungen:
- DE-A- 19 619 982
- US-A- 3 224 474

## Beschreibung

Die Erfindung betrifft ein Elektrowerkzeug gemäß dem oberbegriff der Anspruchs 1, insbesondere handgeführtes Elektrowerkzeug, wie Handkreissäge und dergleichen, mit einem, mittels einer Welle motorisch angetriebenen Werkzeug und einer mechanischen Bremsvorrichtung zum Abbremsen des Werkzeuges, wobei die Bremsvorrichtung einen Betätigungsteil mit einer Rückstellfeder, eine an der Welle drehfest befestigte Bremstrommel und einen am Bestätigungsteil befestigten Bremsteil aufweist. Dabei ist das Bremsteil mittels des Betätigungsteils mit der Kraft der Rückstellfeder geradlinig auf die Umfangsfläche der Bremstrommel drückbar und bremst damit das Werkzeug ab. Unter der Umfangsfläche ist eine Fläche der Aussenkontur zu verstehen, die im Wesentlichen koaxial zur Welle ausgebildet ist. Die Bremstrommel ist ein derart ausgebildeter Körper, dass keine Unwucht entsteht.

US 3,224,474 beschreibt ein solches Elektrowerkzeug.

Elektrowerkzeuge laufen, vor allem wenn sie hochtourig arbeiten, langsam aus. Damit stellen sie einerseits für einen das Elektrowerkzeug bedienenden Anwender und andererseits für das Elektrowerkzeug selbst, eine Gefahr dar. Durch ein schnelles Abbremsen des Werkzeuges, bevor der Anwender das Elektrowerkzeug ablegen oder in die Nähe des Werkzeuges gelangen kann, wird dies vermieden.

Dadurch, dass hierbei das Bremsteil geradlinig zur Umfangsfläche der Bremstrommel bewegt wird, kann auf aufwändige Konstruktion eines eine Schwenkmechanismus verzichtet werden. Das Bremsteil bewegt sich dabei geradlinig, das heisst, es vollführt keine Rotationsbewegung. Ausserdem ist die herstellungstechnisch aufwändige Führung, beispielsweise über mehrere Gelenke, des Betätigungsteiles nicht notwendig. Damit ergibt sich eine solide und einfach herzustellende Lösung.

US 3,224,474 beschreibt eine Handkreissäge mit einer mechanischen Bremsvorrichtung zum Abbremsen des Werkzeugs. Diese weist ein gegen die Kraft einer Schraubenfeder verstellbares Betätigungsteil auf, das im Gehäuse linear verschiebbar gelagert ist. An diesem Betätigungsteil ist ein Bremsteil vorgesehen, der dabei durch die Schraubenfeder gegen die Umfangsfläche einer Bremstrommel vorgespannt ist.

Aus der DE-A-4007030 ist Ein Elektrowerkzeug mit einem, mittels einer Welle durch einen von einem Schalter betätigbaren Motor angetriebenen Werkzeug und einer mechanischen Bremsvorrichtung zum Abbremsen des Werkzeuges bekannt. Die Bremsvorrichtung weist ein Betätigungsteil mit einer Rückstellfeder und ein Sicherungselement, das zwischen einer Sicherungsposition und einer Freigabeposition beweglich gelagert ist, auf. Ausserdem weist es eine an der Welle befestigte Bremstrommel und einen am Bestätigungsteil befestigten Bremsteil auf. Das Betätigungsteil ist mechanisch derart mit dem Sicherungselement gekoppelt, dass in der Freigabeposition die Bremsvorrichtung gelöst und in der Sicherungsposition die Bremsvorrichtung betätigt ist. Während in der Freigabeposition des Sicherungselementes der Schalter zum Betätigen des Motors ansteuerbar ist, ist er in der Sicherungsposition gesperrt, um ein Ansteuern des Motors bei betätigter Bremsvorrichtung zu vermeiden. Das mittels des Betätigungsteiles mit dem Sicherungselement ver-bundene Bremsteil ist durch einen Bolzen schwenkbar am Motor befestigt. In der Sicherungsposition drückt das Sicherungselement das Bremsteil an die an der Welle befestigte Bremstrommel. Durch die Reibung zwischen Bremstrommel und Bremsteil wird das Werkzeug über die Welle abgebremst. Wird das Sicherungselement in die Freigabeposition bewegt, so schwenkt das Bremsteil von der Bremstrommel weg und die Bremsvorrichtung ist gelöst. Dadurch ist es dem Anwender des Elektrowerkzeuges nicht möglich, in der Sicherungsposition des Sicherungsschalters den Motor und somit das Werkzeug in Drehung zu versetzen. Ausserdem muss die Kraft zum Freigeben oder Sichern des Werkzeuges nur beim Betätigen des Schalters aufgebracht werden. Während des arbeitsvorganges muss der Anwender das Elektrowerkzeug nur mittels Schalter steuern.

Nachteilig an dieser bekannten Lösung ist die aufwendige Konstruktion des Schwenkmechanismus und die damit verbundenen Herstellungskosten. Ausserdem wirkt die gesamte Bremskraft auf den Schwenkmechanismus, beispielsweise auf einen einzigen Bolzen.

Ferner wird um die Auslaufzeit in jedem Drehzahlbereich des Elektrowerkzeuges und Ausbildung des Werkzeuges gering zu halten, eine höhere Anpresskraft des Bremsteils benötigt. Somit wird beispielsweise die Betätigung des Sicherungselementes für den Anwender kraftaufwändig, was zu einer insgesamt geringeren Handlichkeit des Elektrowerkzeuges führt.

Der vorliegenden Erfindung liegt die Aufgabe zugrunde, eine zuverlässige Bremse anzugeben, die sich durch gute Handlichkeit auszeichnet und ferner wirtschaftlich in ihrer Herstellung ist.

Erfindungsgemäss wird die Aufgabe dadurch gelöst, dass das Betätigungsteil in Zustellrichtung verlaufende Langlöcher aufweist in die, zur Führung derselben, Dome eingreifen, um eine zuverlässige und zugleich wirtschaftlich herstellbare Führung des Betätigungsteiles und des Bremsteiles in Zustellrichtung zu gewährleisten. In einer bevorzugten Ausführung sind die Dome am Gehäuse oder am Motor befestigt.

Vorteilhafterweise ist die Wirkrichtung des Bremsteils in Drehrichtung der Welle gegenüber der Zustellrichtung des Betätigungsteils um einen Winkel versetzt, der höchstens 90° beträgt, um die kinetische Energie der Welle zur Bremsverstärkung zu nutzen. Somit ist die vom Anwender aufzubringende Bedienkraft geringer, da die Federkraft reduziert werden kann bei gleichbleibender Auslaufzeit abhängig vom Drehzahlbereich des Elektrowerkzeuges und der Ausgestaltung des Werkzeuges, da die zur Verfügung stehende kinetische Energie mit diesen Parametern zu- oder abnimmt. Beim Bremsvorgang wird das Betätigungsteil auf der Zustellrichtung geradlinig geführt. Die Wirkrichtung des Bremsteils ist die Normale zur eigentlichen wirksamen Fläche des Bremsteils. Da der Winkel weniger als 90° beträgt, tritt ein sogenannter Keileffekt ein. Beim Betätigen der Bremsvorrichtung entsteht zwischen der Bremstrommel und dem Bremsteil, insbesondere der wirksamen Fläche des Bremsteiles, Reibung. Durch das Drehmoment der Welle und die Führung in der Zustellrichtung des Betätigungsteiles wird das Bremsteil hineingezogen und damit die in Wirkrichtung auftretende Kraft auf das Bremsteil durch die keilförmige Anordnung verstärkt. Somit ist nicht die gesamte Kraft zum Bremsen des Werkzeuges von der Rückstellfeder aufzubringen, sondern nur eine genügend hohe Kraft, sodass die Bremsverstärkung eintritt.

Der Winkel (α) beträgt in bevorzugter Weise 5° bis 45°, damit die Bremsverstärkung optimal ist.

Vorteilhafterweise ist das Betätigungsteil einteilig ausgebildet. Damit ist eine stabile Führung des Bremsteils sichergestellt. Ferner erhöht dieses Merkmal die Standzeit des Elektrowerkzeuges erheblich, insbesondere der Bremsvorrichtung, und fördert eine einfache und schnelle Montage bei der Herstellung.

Das Betätigungsteil ist vorzugsweise aus Kunststoff, da dieses Material herstellungstechnisch einfach zu bearbeiten ist. Treten jedoch spezielle Anforderungen auf, so kann selbstverständlich auch ein anderes Material, wie beispielsweise Metall, Anwendung finden. Das Betätigungsteil wird in bevorzugter Weise mit einem Spritzgussverfahren hergestellt.

Ausserdem erstreckt sich das Betätigungsteil, zumindest teilweise, kreisförmig um die Welle, damit eine ausreichende Stabilität mit einem hohen Grad an Kompaktheit gewährleistet ist.

Die Erfindung wird nachstehend anhand eines Ausführungsbeispieles näher erläutert. Es zeigen:
Fig. 1 Frontansicht einer, teilweise dargestellten, Bremsvorrichtung im gelösten Zustand
Fig. 2 die in Fig. 1 dargestellte Bremsvorrichtung im betätigten Zustand

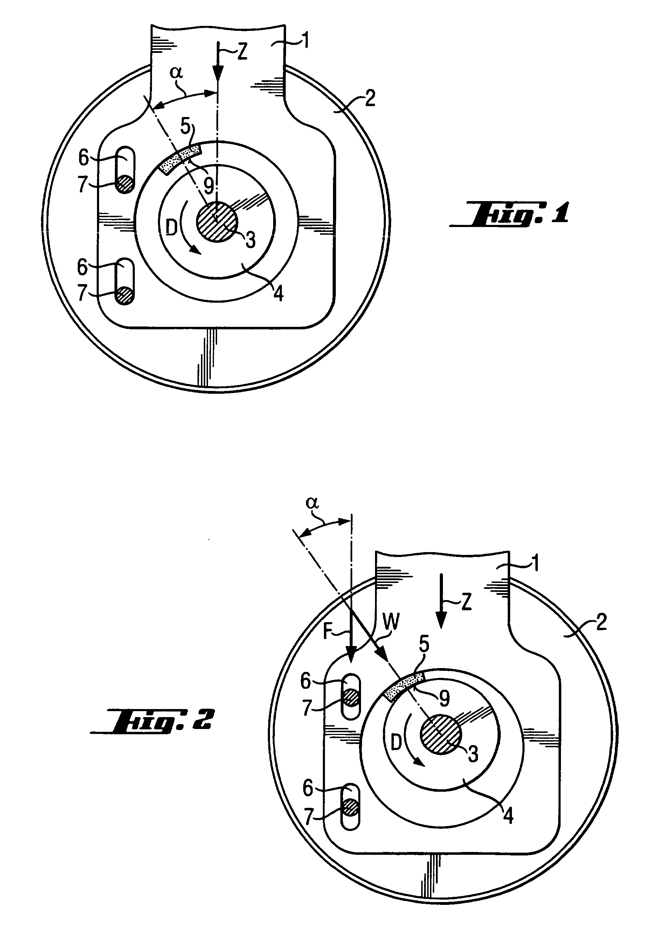

In den Fig. 1 und 2 ist eine erfindungsgemässe Bremsvorrichtung eines Elektrowerkzeuges, insbesondere Kreissäge, mit einem Betätigungsteil 1 an dem ein Bremsteil 5 befestigt ist, teilweise dargestellt. Das Bremsteil 5 wirkt mit einer, an einer Welle 3 befestigten Bremstrommel 4 zusammen. Die Welle 3 dient mittels eines Motors 2 zum Antrieb eines nicht dargestellten Werkzeuges, beispielsweise eines Sägeblatts.

Das Betätigungsteil 1 weist zur Führung in eine Zustellrichtung Z desselben, mehrere insbesondere zwei, in die Zustellrichtung Z verlaufende Langlöcher 6, in die am Motor 2 befestigte Dome 7 eingreifen, auf. In einer Sicherungsposition befinden sich das Bremsteil 5 und die Bremstrommel 4 im Bereich einer Bremsfläche 9 am Bremsteil 5 in Kontakt. Die Normale zur Bremsfläche 9 durch den Schwerpunkt des Bremsteils 5 stellt die Wirkrichtung W dar, die in einer Drehrichtung D der Welle gegenüber der Zustellrichtung Z um einen Winkel α versetzt angeordnet ist, wie dies insbesonders aus Fig. 2 ersichtlich ist.

Um eine Freigabeposition der Bremsvorrichtung zu bewirken, wie sie insbesondere in Fig. 1 dargestellt ist, wird das Betätigungselement 1 gegen die Kraft F einer nicht dargestellten Rückstellfeder derart entgegen die Zustellrichtung Z bewegt, dass sich das Bremsteil 5 von der Bremstrommel 4 und der Welle 3 im wesentlichen radial wegbewegt. Bei der Freigabe des Sicherungselementes bewegt sich das Betätigungsteil 1 mit dem Bremsteil 5 zurück in eine Sicherungsposition, wie sie insbesondere in Fig. 2 dargestellt ist. Die Rückstellfeder drückt das Betätigungsteil 1, insbesondere das Bremsteil 5, in der Zustellrichtung Z in Richtung der Welle 3. Tritt das Bremsteil 5 in Kontakt mit der Bremstrommel 4, so besteht zwischen beiden Elementen eine Reibung. Dreht die Welle 3 in die Drehrichtung D, so wird diese einerseits durch die von der Reibung verursachten Kraft abgebremst und andererseits tritt durch die versetzte Anordnung zwischen Wirkrichtung W und der Zustellrichtung Z eine Bremsverstärkung ein. Durch die Bremsverstärkung erhöht sich die in Wirkrichtung W auf das Bremsteil 5 wirkende Kraft und verkürzt damit die Ansprechzeit der Bremsvorrichtung.

## Patentansprüche

1. Elektrowerkzeug, insbesondere handgeführtes Elektrowerkzeug, wie Handkreissäge und dergleichen, mit einem, mittels einer Welle (3) motorisch angetriebenen Werkzeug und einer mechanischen Bremsvorrichtung zum Abbremsen des Werkzeuges, wobei die Bremsvorrichtung einen Betätigungsteil (1) mit einer Rückstellfeder, eine an der Welle drehfest befestigte Bremstrommel (4) und einen am Betätigungsteil (1) befestigten Bremsteil (5) aufweist wobei das Bremsteil (5) mittels des Betätigungsteils (1) mit der Kraft der Rückstellfeder geradlinig auf die Umfangsfläche der Bremstrommel (4) drückbar ist und damit das Werkzeug abbremst, **dadurch gekennzeichnet, dass** das Betätigungsteil (1) in Zustellrichtung (Z) verlaufende Langlöcher (6) aufweist, in die, zur Führung derselben, Dome (7) eingreifen.

2. Elektrowerkzeug nach Anspruch 1, **dadurch gekennzeichnet, dass** die Normale zu einer Bremsfläche (9) durch dem Schwerpunkt des Bremsteils (5) in Drehrichtung (D) der Welle (3) gegenüber der Zustellrichtung (Z) des Betätigungsteils (1) um einen Winkel (a) versetzt ist, der höchstens 90° beträgt.

3. Elektrowerkzeug nach Anspruch 2, **dadurch gekennzeichnet, dass** der Winkel (α) 5° bis 45° beträgt.

4. Elektrowerkzeug nach einem der Ansprüche 1 bis 3, **dadurch gekennzeichnet, dass** das Betätigungsteil (1) einteilig ausgebildet ist.

5. Elektrowerkzeug nach einem der Ansprüche 1 bis 4, **dadurch gekennzeichnet, dass** das Betätigungsteil (1) aus Kunststoff ist.

6. Elektrowerkzeug nach einem der Ansprüche 1 bis 5, **dadurch gekennzeichnet, dass** sich das Betätigungsteil (1), zumindest teilweise, kreisförmig um die Welle (3) erstreckt.

## Claims

1. Electric power tool, particularly a hand-held one, such as a hand-held circular saw and suchlike, with a tool that is driven by a motor, by means of a shaft (3), and with a mechanical braking device for braking the tool, whereby the braking device has an operating section (1) with a return spring, a brake drum (4) and a brake section (5) that is attached to the operating section (1), whereby the brake section (5) can be pressed in a straight onto the peripheral face of the brake drum (4), with the force of the return spring, and the tool thereby brakes.

2. Electric power tool in accordance with claim 1, **characterized in that** the brake section (5) is displaced, by an angle (α) of at most 90°, in the direction of rotation (D) of the shaft (3), in relation to the closing direction (Z) of the operating section (1).

3. Electric power tool in accordance with claim 2, **characterized in that** the angle (α) is from 5° to 45°, **characterized in that** the operating section (1) has oblong holes (6), running in the direction (Z) of closing, in which dome-type elements (7) engage in order to guide the said operating section (1).

4. Electric power tool in accordance with one of claims 1 to 3, **characterized in that** the operating section (1) is formed as a single piece.

5. Electric power tool in accordance with one of claims 1 to 4, **characterized in that** the operating section (1) is made of plastic.

6. Electric power tool in accordance with one of claims 1 to 5, **characterized in that** the operating section (1) extends at least partially, in a circular form, around the shaft (3).

## Revendications

1. Appareil électrique, en particulier appareil électrique à guidage manuel, tel que scie circulaire portative et analogue, comprenant un outil entraîné par un moteur au moyen d'un arbre (3) et un dispositif de freinage mécanique pour freiner l'outil, le dispositif de freinage comportant une partie d'actionnement (1) avec un ressort de rappel, un tambour de freinage (4) solidarisé en rotation à l'arbre, et une partie de freinage (5) fixée à la partie d'actionnement (1), la partie de freinage (5) pouvant, par l'intermédiaire de la partie d'actionnement (1), être poussée en ligne droite par la force du ressort de rappel contre la surface périphérique du tambour de freinage (4) et freinant ainsi l'outil, **caractérisé en ce que** la partie d'actionnement (1) comporte des trous oblongs (6) qui s'étendent dans la direction d'avance (Z) et dans lesquels pénètrent des plots (7) pour les guider.

2. Appareil électrique selon la revendication 1, **caractérisé en ce que** la normale à une surface de freinage (9) passant par le centre de gravité de la partie de freinage (5) est décalée d' un angle (α) d' au plus 90° dans le sens de rotation D de l'arbre (3) par rapport à la direction d'avance (Z) de la partie d'actionnement (1).

3. Appareil électrique selon la revendication 2, **caractérisé en ce que** l'angle (α) est de 5° à 45°.

4. Appareil électrique selon une des revendications 1 à 3, **caractérisé en ce que** la partie d'actionnement (1) est conformée d'un seul tenant.

5. Appareil électrique selon une des revendications 1 à 4, **caractérisé en ce que** la partie d'actionnement (1) est en matière plastique.

6. Appareil électrique selon une des revendications 1 à 5, **caractérisé en ce que** la partie d'actionnement (1) s'étend au moins partiellement de manière circulaire autour de l'arbre (3).
